# EUROPÄISCHE PATENTSCHRIFT

(11) **EP 3 569 970 B1**
(45) Veröffentlichungstag und Bekanntmachung des Hinweises auf die Patenterteilung: **23.08.2023**
(21) Anmeldenummer: 19171880.8
(22) Anmeldetag: 30.04.2019
(51) Int. Cl.: F42B 1/02, G06F 21/88

(54) **NOTZERSTÖRBARE DATENTRÄGERANORDNUNG UND VERFAHREN ZUR HERSTELLUNG, VERFAHREN ZUR NOTZERSTÖRUNG VON ZUMINDEST EINEM DATENTRÄGER, UND HOHLLADUNG**
DATA STORAGE WITH EMERGENCY DESTRUCTION SYSTEM AND METHOD FOR PRODUCING SAME, METHOD FOR THE EMERGENCY DESTRUCTION OF AT LEAST ONE DATA STORAGE, AND HOLLOW CHARGE
AGENCEMENT DE SUPPORT DE STOCKAGE MÉMOIRE DESTRUCTIBLE EN CAS D'URGENCE ET PROCÉDÉ DE FABRICATION, PROCÉDÉ DE DESTRUCTION EN CAS D'URGENCE D'AU MOINS UN SUPPORT DE STOCKAGE MÉMOIRE, ET CHARGE CREUSE

(30) Priorität: 16.05.2018 DE 102018003949
(43) Veröffentlichungstag der Anmeldung: 20.11.2019
(73) Patentinhaber: MBDA Deutschland GmbH, 86529 Schrobenhausen (DE)
(72) Erfinder: SLANY, Thorsten, 86529 Schrobenhausen (DE); MECHLER, Ulrich, 80937 München (DE)
(74) Vertreter: Isarpatent

(56) Entgegenhaltungen:
- RU-C1- 2 630 487
- Hauke Gierow: "Der Sprengstoff sprengt ein bisschen zu gut - Festplatten zerstören: Wie man in 60 Sekunden ein Datencenter auslöscht - Golem.de", , 28. März 2017 (2017-03-28), XP055628907, Gefunden im Internet: URL:https://web.archive.org/web/2017032801 1047/https://www.golem.de/news/festplatten -zerstoeren-wie-man-in-60-sekunden-ein-dat encenter-ausloescht-1703-126940-3.html [gefunden am 2019-10-04]
- anonymous: "Annular shaped charge vs HDD demo", Youtube, 26. März 2016 (2016-03-26), Seite 1, XP054979444, Gefunden im Internet: URL:https://www.youtube.com/watch?v=Fuk9d- -szo0 [gefunden am 2019-06-14]

## Beschreibung

Die vorliegende Erfindung betrifft eine notzerstörbare Datenträgeranordnung, ein Verfahren zur Herstellung einer derartigen notzerstörbaren Datenträgeranordnung, ein Verfahren zur Notzerstörung von zumindest einem Datenträger, eine Hohlladung sowie eine Verwendung einer Hohlladung.

Es existieren unterschiedlichste Zerstörungsmethoden für auf einem Datenträger gespeicherte sensible Daten. Beispielsweise können auf elektronischen Datenträgern gespeicherte sensible Daten mit Softwarealgorithmen in zufälliger Weise überschrieben werden.

Darüber hinaus existieren aber auch physikalische Methoden, welche den Datenträger zerstören. In der Regel werden Datenträger dazu bisweilen geschreddert. Beispielsweise beschreibt die DE 10 2010 049 382 A1 eine Vorrichtung zum Schreddern von Datenträgern.

Die RU 2 630 487 C1 beschreibt ein massives Metallgehäuse, das zur Notzerstörung von Informationsträgern vorgesehen ist. In dem Metallgehäuse sind pyrotechnische Platten eingebracht. Ferner ist seitlich eine Hohlladung vorgesehen.

Auch im Internet finden sich Ideen, Festplatten durch Hohlladungen zu zerstören (XP055628907): https://web.archive.org/web/20170328011047/https://www.golem.de/ news/festplatten-zerstoeren-wie-man-in-60-sekunden-ein-datencenter-ausloescht-1703-126940-3.html

Vor diesem Hintergrund liegt der vorliegenden Erfindung die Aufgabe zugrunde, eine verbesserte Notzerstörung für Datenträger bereitzustellen.

Erfindungsgemäß wird diese Aufgabe gelöst durch eine notzerstörbare Datenträgeranordnung mit den Merkmalen des Patentanspruchs 1 und/oder ein Verfahren zur Herstellung einer notzerstörbaren Datenträgeranordnung mit den Merkmalen des Patentanspruchs 11 und/oder ein Verfahren zur Notzerstörung von zumindest einem Datenträger mit den Merkmalen des Patentanspruchs 12 und/oder eine Hohlladung mit den Merkmalen des Patentanspruchs 13.

Demgemäß ist ein vorgesehen:
- Eine notzerstörbare Datenträgeranordnung, mit: zumindest einem Datenträger; und einer Hohlladung, wobei die Hohlladung ausgelegt ist, den zumindest einen Datenträger physikalisch zu zerstören wobei eine Mehrzahl von Datenträgern in einer magazinierten Anordnung vorgesehen und mittels der Hohlladung physikalisch zerstörbar ist, und wobei die Hohlladung äußere Abmessungen aufweist, welche mit der äußeren Form eines Datenträgers in der magazinierten Anordnung derart konform sind, dass die Hohlladung in der magazinierten Anordnung der Datenträger in gleicher Weise wie die Datenträger anordenbar ist.
- Ein Verfahren zur Herstellung einer notzerstörbaren erfindungsgemäßen Datenträgeranordnung, mit den Schritten: Anordnen zumindest eines Datenträgers, insbesondere in einem Laufwerksgehäuse; und Anordnen einer Hohlladung in der magazinierten Anordnung, insbesondere in oder an dem Laufwerksgehäuse, in einer Ausrichtung relativ zu dem Datenträger, welche zum physikalischen Zerstören des Datenträgers vorgesehen ist.
- Ein Verfahren zur Notzerstörung von zumindest einem Datenträgermit einer erfindungsgemäßen Datenträgeranordnung und/oder mit einer nach einem erfindungsgemäßen Verfahren hergestellten Datenträgeranordnung, wobei eine Hohlladung derart zur Detonation gebracht wird, dass der zumindest eine Datenträger physikalisch zerstört wird.
- Eine Hohlladung für eine erfindungsgemäße Datenträgeranordnung, mit äußeren Abmessungen, welche einem Formfaktor eines für ein normiertes Laufwerksgehäuse vorgesehenen Datenträgers entsprechen.

Die der vorliegenden Erfindung zugrunde liegende Idee besteht darin, eine Hohlladung zur Notzerstörung eines Datenträgers vorzusehen.

Eine Hohlladung weist eine stark gerichtete Wirkungszone auf. Es handelt sich dabei um eine spezielle Anordnung eines Sprengstoffs um eine kegel- oder halbkugelförmige Metalleinlage mit in Wirkungsrichtung gerichteter Öffnung. Ein Zünder, welcher verschiedenste Ausgestaltungen aufweisen kann, beispielsweise als Fernzünder, Zeitzünder, oder dergleichen, sitzt in der Regel an der Rückseite der Ladung, welche der Metalleinlage abgewandt ist. Wird die Ladung gezündet, so bildet sich aufgrund der Stoßwelle der Detonationsfront von der Spitze der Metalleinlage ausgehend ein Stachel aus kaltverformten Metall, der sogenannte Hohlladungsstachel. Dieser durchdringt den Datenträger mit sehr hoher Geschwindigkeit, sodass dieser physikalisch zerstört wird. Erfindungsgemäß kann somit durch eine Detonation der Hohlladung eine auf den Datenträger zielgerichtete Wirkungszone erzeugt werden, in welcher der Hohlladungsstachel den zumindest einen Datenträger sehr schnell und mit sehr hoher Sicherheit physikalisch zerstört.

Auf diese Weise lassen sich auf einem Datenträger gespeicherte Informationen schnell und sicher zerstören, insbesondere ohne dass dazu zeitaufwändige Überschreibungsverfahren, eine aufwändige Schreddervorrichtung oder dergleichen notwendig sind. Beispielhaft eignet sich die Erfindung somit vorteilhaft auch für den mobilen Einsatz. Ferner kann erfindungsgemäß vorteilhaft auch in einer akuten Gefahrensituation ohne größeren zeitlichen Vorlauf eine effektive Notzerstörung durchgeführt werden und so beispielsweise sichergestellt werden, dass die auf dem Datenträger gespeicherten Daten nicht unerwünscht in falsche Hände gelangen.

Durch die charakteristische Richtungskonzentration einer Hohlladung ist die Zerstörungswirkung vorteilhaft im Wesentlichen auf die vorbestimmte Wirkungszone der Hohlladung, d.h. den Bereich des Datenträgers und dessen unmittelbare Umgebung, beschränkbar. Die Hohlladung kann insbesondere dementsprechend ausgelegt sein, ihre Wirkungszone auf den Bereich des zumindest einen Datenträgers oder eines den zumindest einen Datenträger aufnehmenden Laufwerksgehäuses, zumindest im Wesentlichen, zu begrenzen. Für die eine Notzerstörung einleitende Person besteht somit vorteilhaft keine Gefährdung.

Ein erfindungsgemäßes Verfahren zur Notzerstörung zumindest eines Datenträgers ist in der Anwendung vorteilhaft leicht verständlich und somit einfach und effektiv durchführbar.

Insbesondere lässt sich die Erfindung auf magazinierte Datenträger anwenden. Beispielsweise kann es sich bei dem zumindest einen Datenträger um ein sogenanntes Festplattenarray handeln, welches eine Vielzahl von in einem standardisierten Laufwerksgehäuse angeordneten ebenfalls standardisierten Datenträgern aufweist. Die Hohlladung wird dazu in einer Ausrichtung auf oder in dem Laufwerksgehäuse positioniert, sodass die darin magazinierten Datenträger bei einer Detonation der Hohlladung gemeinsam von der Wirkungszone, insbesondere dem Hohlladungsstachel, erfasst und so physikalisch zerstört werden.

Das erfindungsgemäße Verfahren zum Herstellen der Datenträgeranordnung kann somit bei einer Ausführungsform das Anordnen des Datenträgers in einem Laufwerksgehäuse umfassen. Darüber hinaus kann das Verfahren das Anordnen der Hohlladung in oder an dem Laufwerksgehäuse umfassen. Das Anordnen der Hohlladung kann ein Anbringen und/oder Befestigen der Hohlladung umfassen.

Sofern die Hohlladung äußere Abmessungen aufweist, welche einem Formfaktor eines für ein normiertes Laufwerksgehäuse vorgesehenen Datenträgers entsprechen, ist die Hohlladung oder mehrere Hohlladungen auch vorteilhaft ohne zusätzliche Maßnahmen in das Laufwerksgehäuse mit integrierbar. Sie lässt sich dabei innerhalb des Laufwerksgehäuses an jedem zur Aufnahme eines Datenträgers geeigneten Ort anbringen. Auf diese Weise ändert sich die äußere Erscheinung des Laufwerksgehäuses vorteilhaft nicht. Ferner sind keinerlei zusätzliche Vorrichtungen zur geeigneten Positionierung und Ausrichtung der Hohlladungen nötig. Ein Eingriff in das Speichersystem selbst findet zudem technisch nicht statt. Es werden lediglich eigentlich für Datenträger vorgesehene Aufnahmeräume bzw. Aufnahmeschächte das Laufwerksgehäuses für die Aufnahme von Hohlladungen genutzt. Die Anordnung der Hohlladungen ist dabei je nach Anforderung vorteilhaft frei wählbar. Beispielsweise lässt sich so eine Wirkungskonzentration an besonders sensiblen Datenträgern vorsehen, indem diese direkt neben einer Hohlladung oder direkt zwischen zwei Hohlladungen angeordnet werden.

Für die konkrete Anordnung des zumindest einen Datenträgers und der Hohlladung sind darüber hinaus vielfältige andersartige Variationen denkbar. Insbesondere ist es auch denkbar, direkt an einen Datenträger angrenzend eine Hohlladung vorzusehen. Es kann sich um einen oder mehrere Datenträger handeln. Entscheidend ist lediglich die physikalische Zerstörbarkeit des Datenträgers mittels der Hohlladung.

Vorteilhafte Ausgestaltungen und Weiterbildungen ergeben sich aus den weiteren Unteransprüchen sowie aus der Beschreibung unter Bezugnahme auf die Figuren.

Gemäß einer Weiterbildung ist ein zur Aufnahme des zumindest einen Datenträgers ausgebildetes Laufwerksgehäuse vorgesehen, welches die Ausrichtung des zumindest einen Datenträgers in dem Laufwerksgehäuse vorgibt. Somit ist die Hohlladung an dem Laufwerksgehäuse derart ausrichtbar, dass ihre Wirkungszone den zumindest einen Datenträger erfasst. Insbesondere ist das Laufwerksgehäuse zur Aufnahme der Mehrzahl von Datenträgern ausgebildet. Vorzugsweise werden die Datenträger dabei in einer Reihe bzw. einem Stapel magaziniert.

Gemäß einer Ausführungsform weisen das Laufwerksgehäuse und die Hohlladung Verbindungsmittel auf, welche zur Anordnung der Hohlladung in einer vorbestimmten Ausrichtung in oder an dem Laufwerksgehäuse ausgebildet sind. Somit wird eine zur Notzerstörung geeignete Ausrichtung sichergestellt. Auf diese Weise lässt sich die Hohlladung auch bedarfsweise, zum Beispiel im Falle einer absehbaren Gefahrensituation, schnell und einfach an dem Laufwerksgehäuse anbringen und somit eine Notzerstörung auf einfache Weise vorbereiten.

Erfindungsgemäß ist eine Mehrzahl von Datenträgern in einer magazinierten Anordnung vorgesehen und mittels der Hohlladung physikalisch zerstörbar. Insbesondere handelt es sich um eine durch das Laufwerksgehäuse vorgegebene magazinierte Anordnung der Mehrzahl von Datenträger. Vorteilhaft lassen sich auf diese Weise mehrere Datenträger, insbesondere sämtliche in der magazinierten Anordnung vorgesehene Datenträger gleichzeitig, mittels der Hohlladung physikalisch notzerstören, da die Wirkungszone der Hohlladung die gesamte magazinierte Anordnung erfasst. Bei der magazinierten Anordnung kann es sich beispielsweise um eine Reihenanordnung oder Stapelanordnung handeln. Insbesondere ist die Hohlladung derart ausgerichtet, dass die Wirkungszone der Hohlladung entlang der Stapelrichtung verläuft.

Gemäß einer Ausführungsform sind eine erste Hohlladung an einer ersten Seite der magazinierten Anordnung und eine zweite Hohlladung an einer zweiten Seite der magazinierten Anordnung vorgesehen, wobei die erste Hohlladung und die zweite Hohlladung zum gemeinsamen physikalischen Zerstören der Mehrzahl von Datenträger ausgelegt sind. Auf diese Weise wird einerseits die Sicherheit der physikalischen Zerstörung erhöht. Andererseits sind somit auch größere magazinierte Anordnungen, deren Erstreckung länger als die Wirkungszone einer einzelnen Hohlladung ist, gleichermaßen notzerstörbar.

Gemäß einer bevorzugten Weiterbildung sind die erste Hohlladung und die zweite Hohlladung einander entgegengesetzt ausgerichtet. Insbesondere können sie dazu an gegenüberliegenden Seiten eines Laufwerksgehäuses in einer Weise angeordnet sein, dass ihre Wirkungszonen bzw. die Richtungen ihrer Hohlladungsstachel aufeinander ausgerichtet sind. Vorzugsweise sind die Hohlladungen dabei zur gleichzeitigen Zündung ausgelegt. Auf diese Weise ergänzen sich die Wirkungszonen. Insbesondere können sich die Wirkungszonen auch treffen, beispielsweise etwa in der Mitte des Laufwerksgehäuses.

Erfindungsgemäß weist die Hohlladung äußere Abmessungen auf, welche mit der äußeren Form eines Datenträgers in der magazinierten Anordnung derart konform sind, dass die Hohlladung in der magazinierten Anordnung der Datenträger in gleicher Weise wie ein Datenträger anordenbar ist. Insbesondere weist die Hohlladung einen gleichen Formfaktor wie der Datenträger auf. Vorteilhaft lässt sich die Hohlladung somit auf einfache Weise in die magazinierte Anordnung integrieren, insbesondere in ein herkömmliches standardisiertes Laufwerksgehäuse. Auf diese Weise lassen sich auch bestehende Datenträgeranordnungen in der erfindungsgemäßen Weise als notzerstörbare Datenträgeranordnung nachrüsten.

Gemäß einer Weiterbildung ist eine Mehrzahl von Hohlladungen innerhalb der magazinierten Anordnung verteilt angeordnet. Insbesondere sind mehrere Hohlladungen in dem Laufwerksgehäuse verteilt angeordnet. Auf diese Weise lässt sich die Wirkung der Hohlladungen innerhalb der magazinierten Anordnung bedarfsgerecht skalieren. Somit ist eine etwaige durch den Formfaktor bedingte kleinere Dimensionierung der Hohlladungen durch eine höhere Anzahl und geeignete Verteilung der Hohlladungen kompensierbar.

Gemäß einer Ausführungsform ist eine Umgebungsschutzeinrichtung vorgesehen, welche zum Schutz einer Umgebung bei einer physikalischen Zerstörung des zumindest einen Datenträgers mit der Hohlladung, ausgebildet ist. Vorteilhaft wird auf diese Weise die Wirkung einer Notzerstörung auf die Datenträgeranordnung, insbesondere die unmittelbare Umgebung des Datenträgers, beschränkt und die weitere Umgebung geschützt.

Gemäß einer Ausführungsform weist die Umgebungsschutzeinrichtung einen Splitterfang auf. Insbesondere handelt es sich um eine Splitterfangarmierung der Hohlladung. Diese kann beispielsweise aus Splitterschutzmatten oder anderen splittersicheren Materialien gebildet sein. Ein derartiger Splitterfang ist insbesondere zur splittersicheren Abschirmung der Hohlladung und ggfs. der Wirkungszone der Hohlladung von der Umgebung vorgesehen.

Gemäß einer weiteren Ausführungsform weist die Umgebungsschutzeinrichtung eine Flutungseinrichtung zur schützenden Flutung der Umgebung auf. Insbesondere kann diese zur Flutung der Umgebung mit einem Inertgas und/oder einem Löschschaum ausgebildet sein. Auf diese Weise kann eine Auswirkung der mit einer Detonation der Hohlladung entstehenden Hitze auf die Umgebung vorteilhaft reduziert werden. Insbesondere können so resultierende Brände vermieden werden.

Die obigen Ausgestaltungen und Weiterbildungen lassen sich, sofern sinnvoll, beliebig miteinander kombinieren. Insbesondere sind sämtliche Merkmale einer Datenträgeranordnung auf das Verfahren zur Herstellung einer derartigen Datenträgeranordnung übertragbar, und umgekehrt. Darüber hinaus lassen sich die Merkmale der Datenträgeranordnung auch auf ein Verfahren zur Notzerstörung von zumindest einem Datenträger sowie auf eine Verwendung einer Hohlladung zur Notzerstörung von zumindest einem Datenträger übertragen.

Weitere mögliche Ausgestaltungen, Weiterbildungen und Implementierungen der Erfindung umfassen auch nicht explizit genannte Kombinationen von zuvor oder im Folgenden bezüglich der Ausführungsbeispiele beschriebenen Merkmale der Erfindung. Insbesondere wird dabei der Fachmann auch Einzelaspekte als Verbesserungen oder Ergänzungen zu der jeweiligen Grundform der vorliegenden Erfindung hinzufügen.

Die vorliegende Erfindung wird nachfolgend anhand der in den schematischen Figuren angegebenen Ausführungsbeispiele näher erläutert. Es zeigen dabei:
- Fig. 1: eine schematische Darstellung einer offenbarten Datenträgeranordnung mit einem nicht erfindungsgemäß einzelnen Datenträger;
- Fig. 2: eine schematische Darstellung einer offenbarten Datenträgeranordnung gemäß einer weiteren Ausführungsform;
- Fig. 3A: eine schematische Darstellung einer offenbarten Datenträgeranordnung gemäß einer noch weiteren Ausführungsform;
- Fig. 3B: eine schematische Darstellung der Wirkungsweise der Hohlladungen der offenbarten Datenträgeranordnung gemäß Fig. 3A;
- Fig. 4: eine schematische Darstellung einer erfindungsgemäßen Datenträgeranordnung; und
- Fig. 5: eine schematische Darstellung einer offenbarten Datenträgeranordnung gemäß einer noch weiteren Ausführungsform.

Die beiliegenden Figuren sollen ein weiteres Verständnis der Ausführungsformen der Erfindung vermitteln. Sie veranschaulichen Ausführungsformen und dienen im Zusammenhang mit der Beschreibung der Erklärung von Prinzipien und Konzepten der Erfindung. Andere Ausführungsformen und viele der genannten Vorteile ergeben sich im Hinblick auf die Zeichnungen. Die Elemente der Zeichnungen sind nicht notwendigerweise maßstabsgetreu zueinander gezeigt.

In den Figuren der Zeichnung sind gleiche, funktionsgleiche und gleich wirkende Elemente, Merkmale und Komponenten - sofern nichts anderes ausgeführt ist - jeweils mit denselben Bezugszeichen versehen.

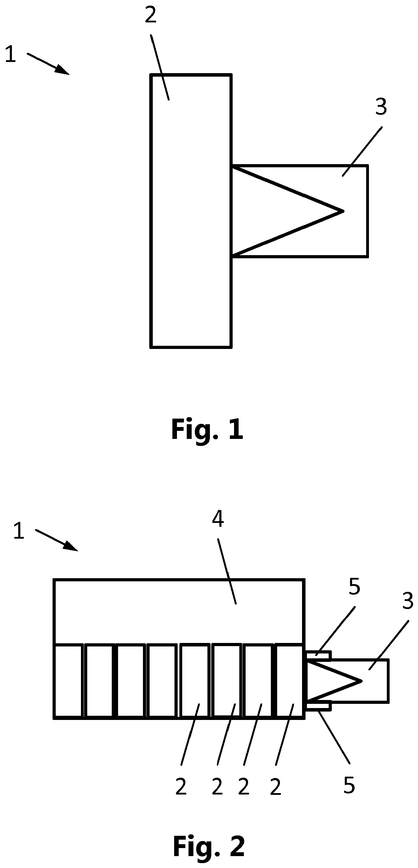

Fig. 1 zeigt eine schematische Darstellung einer offenbarten Datenträgeranordnung 1.

Die Datenträgeranordnung 1 weist einen Datenträger 2 und eine an den Datenträger 2 angeordnete und auf den Datenträger ausgerichtete Hohlladung 3 auf. Bei dem Datenträger 2 handelt es sich insbesondere um einen elektronischen bzw. digitalen Datenträger, wie Festplatten, Flash Speicher, Magnetbänder oder dergleichen. Die Hohlladung 3 ist derart ausgelegt, den Datenträger 2 physikalisch zu zerstören. Auf diese Weise ist die Datenträgeranordnung 1, insbesondere der darin vorgesehenen Datenträger 2, durch Detonation der Hohlladung notzerstörbar. Die Hohlladung 3 ist dabei derart ausgelegt, dass auf dem Datenträger gespeicherte Daten durch die Zerstörungswirkung in nicht mehr rekonstruierbarer Weise vernichtbar sind.

Zur Herstellung einer derartigen notzerstörbaren Datenträgeranordnung 1 wird der Datenträger 2 in einem ersten Schritt in einer gewünschten Weise angeordnet. Ein zweiter Schritt umfasst das Anordnen einer Hohlladung 3 in einer Ausrichtung relativ zu dem Datenträger 2, welche zum physikalischen Zerstören des Datenträgers 2 vorgesehen ist.

Die Datenträgeranordnung 1 mit der Hohlladung 3 kann, beispielsweise bei hochsensiblen Daten, zum ständigen Gebrauch vorgesehen sein. Alternativ oder zusätzlich kann die Datenträgeranordnung auch erst zur Vorbereitung einer Notzerstörung des Datenträgers 2 durch Anbringen der Hohlladung fertiggestellt werden.

Darüber hinaus ist mit einer derartigen Datenträgeranordnung 1 ein Verfahren zur Notzerstörung von zumindest einem Datenträger 2 durchführbar, indem die Hohlladung 3 derart zur Detonation gebracht wird, dass der zumindest eine Datenträger 2 physikalisch zerstört wird.

Fig. 2 zeigt eine schematische Darstellung einer offenbarten Datenträgeranordnung 1 gemäß einer weiteren Ausführungsform.

Bei dieser Ausführungsform ist ein zur Aufnahme einer Mehrzahl von Datenträgern 2 ausgebildetes Laufwerksgehäuse 4 vorgesehen. Das Laufwerksgehäuse gibt die Ausrichtung der Datenträger 2 in dem Laufwerksgehäuse 4 vor. Beispielsweise sind darin vorbestimmte Datenträgerschächte oder Steckplätze vorgesehen. Die Mehrzahl von Datenträgern 2 ist somit in einer durch das Laufwerksgehäuse 4 vorgegebenen magazinierten Anordnung vorgesehen, in welcher sie mittels der Hohlladung 3 physikalisch zerstörbar ist.

Bei der dargestellten Ausführungsform handelt es sich beispielhaft um eine horizontale Reihenanordnung der jeweils hochkant ausgerichteten Datenträger 2. Bei weiteren Ausführungsformen kann es sich auch um andere Ausrichtungen, beispielsweise eine vertikale Stapelanordnung liegend angeordneter Datenträger 2, handeln.

Darüber hinaus weisen das Laufwerksgehäuse 4 und die Hohlladung 3 hier lediglich schematisch symbolisierte Verbindungsmittel 5 auf, welche zur Anordnung der Hohlladung 3 in einer vorbestimmten Ausrichtung an dem Laufwerksgehäuse 4 ausgebildet sind. Bei den Verbindungsmitteln kann es sich insbesondere um vorbereitete Verbindungsmittel handeln, beispielsweise geeignete Positionierungshilfen, Befestigungsmittel, oder dergleichen. Beispielsweise sind rein beispielhaft vorbereitete Befestigungslöcher und Verbindungsbolzen oder -schrauben, Befestigungsösen und Rast- oder Schnappverbinder oder dergleichen als Verbindungsmittel 5 denkbar. Mit derartigen Verbindungsmitteln 5 lässt sich die Hohlladung 3 schnell und einfach in der vorbestimmten Position und Ausrichtung an dem Laufwerksgehäuse 4 anbringen.

Durch das Laufwerksgehäuse 4 und die Verbindungsmittel 5 ist somit eine Ausrichtung der Hohlladung 3 relativ zu den Datenträgern 2 vorbestimmt, welche zum physikalischen Zerstören der Datenträger 2 mittels der Hohlladung 3 vorgesehen ist.

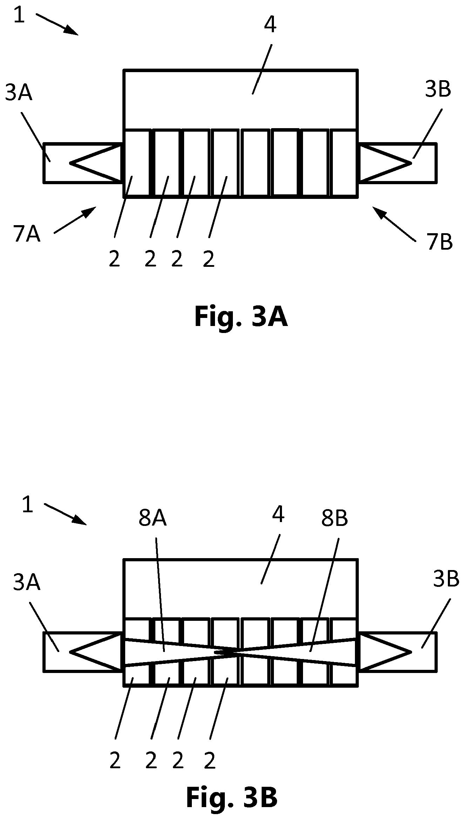

Fig. 3A zeigt eine schematische Darstellung einer offenbarten Datenträgeranordnung gemäß einer noch weiteren Ausführungsform.

Bei dieser Ausführungsform ist eine beidseitige Anordnung von Hohlladungen an dem Laufwerksgehäuse 4 vorgesehen. Eine erste Hohlladung 3A ist demnach an einer ersten Seite 7A des Laufwerksgehäuses 4, und eine zweite Hohlladung 3B an einer zweiten Seite 7B des Laufwerksgehäuses 4 vorgesehen.

Bei der dargestellten Ausführungsform sind die beiden Seiten 7A, 7B gegenüberliegend angeordnet. Die Hohlladungen 3A, 3B sind somit einander entgegengesetzt ausgerichtet. Auf diese Weise wird eine zuverlässige physikalische Zerstörung sämtlicher dazwischen angeordneter Datenträger 2 gewährleistet.

Bei weiteren Ausführungsformen wäre es je nach Anordnung der Datenträger 2 auch denkbar, zwei oder mehr Hohlladungen 3 in einer anderen Ausrichtung zueinander anzuordnen. Die Anordnung der Hohlladungen 3 wird dabei vorzugsweise derart vorgesehen, dass damit sämtliche Datenträger 2 gleichzeitig physikalisch zerstörbar sind. Ferner sind Anordnungen denkbar, wobei mit einer zweiten oder weiteren Hohlladung 3 eine Konzentration der physikalischen Zerstörungswirkung auf einen oder mehrere bestimmte Datenträger 2 vorgesehen ist, beispielsweise sofern einzelne Datenträger besonders sensible Daten enthalten.

Fig. 3B zeigt eine schematische Darstellung der Wirkungsweise der Hohlladungen der Datenträgeranordnung gemäß Fig. 3A.

Die erste Hohlladung 3A und die zweite Hohlladung 3B sind dabei zum gemeinsamen physikalischen Zerstören der Mehrzahl von Datenträger 2 ausgelegt. In der Darstellung sind schematisch die von den Hohlladungen 3A, 3B im Falle einer Detonation zur Notzerstörung der Datenträger 2 ausgehenden Wirkungszonen 8A, 8B eingezeichnet. In den Wirkungszonen stoßen die jeweiligen Hohlladungsstachel jeweils ausgehend von der zugeordneten Hohlladung 3A, 3B in Stapelrichtung durch die magazinierte Anordnung der Datenträger 2. Die Wirkungszonen 8A, 8B der Hohlladungen treffen sich hier beispielhaft in der Mitte der magazinierten Anordnung der Datenträger 2. Auf diese Weise wird eine zuverlässige Erfassung und physikalische Zerstörung jedes einzelnen Datenträgers 2 in der Anordnung sichergestellt.

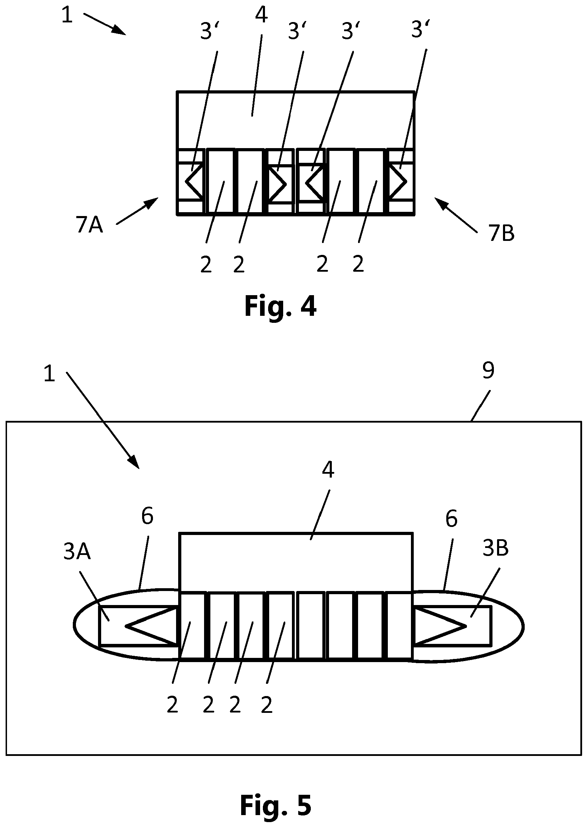

Fig. 4 zeigt eine schematische Darstellung einer erfindungsgemäßen Datenträgeranordnung 1.

Diese Ausführungsform unterscheidet sich maßgeblich von den vorangehend beschriebenen Ausführungsformen durch eine Anordnung von Hohlladungen 3' innerhalb des Laufwerksgehäuses 4.

Die Hohlladungen 3' weisen dazu erfindungsgemäß äußere Abmessungen auf, welche mit der äußeren Form eines Datenträgers 2 in der magazinierten Anordnung konform sind. Für die Hohlladungen 3' wird insbesondere ein gleicher Formfaktor vorgesehen wie für die Datenträger 2, sodass die äußeren Abmessungen der Hohlladung 3' dem Formfaktor eines für ein normiertes Laufwerksgehäuse 4 vorgesehenen normierten Datenträgers 2 entsprechen oder diesen in zumindest einer Dimension übernehmen und im Übrigen kleiner vorgesehen sind. Insbesondere handelt es sich um einen normierten bzw. einem Industriestandard entsprechenden Formfaktor. Beispielsweise kann es sich um handelsübliche Formfaktoren für Festplatten handeln, wie 3,5", 2,5" oder 1,8". Der Formfaktor ist dabei durch Standardabmaße charakterisiert, beispielsweise etwa 146 mm x 102 mm für 3,5" Festplatten mit Höhen von etwa 26 mm bis 42 mm oder etwa 70 mm x 100mm für 2,5" Festplatten mit Höhen von etwa 7 mm bis 19 mm.

Durch die gleichen Abmaße lassen sich die Hohlladungen 3 direkt in der magazinierten Anordnung der Datenträger 2 in gleicher Weise wie die Datenträger 2 anordnen. Die dargestellte Mehrzahl von Hohlladungen 3', welche innerhalb der magazinierten Anordnung verteilt angeordnet sind, ist dabei rein beispielhaft zu verstehen. Bei weiteren Ausführungsformen kann es sich insbesondere auch lediglich um eine einzelne an einer Seite 7A oder 7B des Laufwerksgehäuse 4, d.h. in einem ersten bzw. letzten Datenträgerschacht, angeordnete Hohlladung 3' handeln. Ferner denkbar sind auch lediglich an den beiden Seiten 7A, 7B, d.h. an den jeweiligen randseitigen Schächten angeordnete Hohlladungen 3'.

Darüber hinaus können die Hohlladungen 3' auch innerhalb der magazinierten Anordnung in anderer Weise bedarfsgerecht verteilt werden. Die Anordnung der Hohlladungen 3' kann ferner flexibel geändert werden. Des Weiteren ist auch eine unterschiedliche Konzentration von Hohlladungen 3 für die einzelnen Datenträger möglich. Beispielsweise kann eine höhere Konzentration von Hohlladungen 3' im Bereich von Datenträgern 2 mit besonders sensiblen Daten vorgesehen werden, während in Bereichen von Datenträgern mit regulären Daten eine geringere Konzentration von Hohlladungen 3' vorgesehen wird. Beispielsweise kann auf die besonders sensiblen Datenträger 2 jeweils eine Hohlladung 3' von beiden Seiten gerichtet sein, während auf die regulären Datenträger 2 lediglich einseitig eine Hohlladung 3'gerichtet ist.

Bei dem Laufwerksgehäuse 4 kann es sich insbesondere um ein gemäß einem Industriestandard geformtes bzw. handelsübliches genormtes Laufwerksgehäuse 4 handeln. Insbesondere kann es sich beispielsweise um ein sogenanntes 19 Zoll Laufwerksgehäuse handeln, wie es in der Industrie üblicherweise eingesetzt wird. Die Hohlladungen 3' sind somit im Format der standardisierten Laufwerkschächte vorgesehen. Somit ist auch eine einfache Nachrüstbarkeit bei handelsüblichen Datenträgersystemen gewährleistet.

Eine etwaige im Vergleich zu den vorangehenden Ausführungsformen kleinere Dimensionierung der Hohlladungen 3' kann durch eine Erhöhung der Anzahl und Integration bzw. Verteilung der Hohlladungen 3' innerhalb des Stapels kompensiert werden.

Fig. 5 zeigt eine schematische Darstellung einer offenbarten Datenträgeranordnung gemäß einer noch weiteren Ausführungsform.

Bei dieser Ausführungsform ist eine Umgebungsschutzeinrichtung 6 vorgesehen, welche zum Schutz einer Umgebung 9 der Datenträgeranordnung 1 bei einer physikalischen Zerstörung der Datenträger 2 mit den Hohlladungen 3A, 3B, ausgebildet ist. Die Umgebungsschutzeinrichtung 6 weist hier beispielhaft einen Splitterfang auf, welcher eine Splitterfangarmierung der Hohlladungen 3A, 3B, aufweist. Bei der Armierung kann es sich beispielsweise um splittersichere Matten handeln, welche die von dem Laufwerksgehäuse abgewandten Seiten der Hohlladung abdecken.

Bei weiteren Ausführungsformen wäre es auch denkbar, nicht lediglich die Hohlladungen sondern die gesamte Datenträgeranordnung 1 mit einem Splitterfang zu versehen. Beispielsweise kann bei weiteren Ausführungsformen die Splitterfangarmierung auch das Laufwerksgehäuse 4 umgeben. Darüber hinaus kann ein Splitterfang auch bei einer Ausführungsform nach Fig. 4 vorgesehen sein, beispielsweise in Form eines verstärkten Laufwerksgehäuse 4. Optional oder zusätzlich kann auch eine Splitterfangarmierung des Laufwerksgehäuses 4 vorgesehen sein.

Obwohl die vorliegende Erfindung anhand bevorzugter Ausführungsbeispiele vorstehend vollständig beschrieben wurde, ist sie darauf nicht beschränkt, sondern auf vielfältige Art und Weise modifizierbar.

Beispielsweise kann die Umgebungsschutzeinrichtung 6 eine Flutungseinrichtung aufweisen, welche zur schützenden Flutung der Umgebung 9 mit einem Brandhemmer ausgebildet ist. Insbesondere kann es sich bei dem Brandhemmer um ein in der Flutungseinrichtung gespeichertes Inertgas oder einen Schaum, vorzugsweise einen Löschschaum, handeln. Die Flutungseinrichtung wird in diesem Fall vor einer Detonation der Hohlladung zum Schutz der Umgebung 9 vorausgelöst, wobei die Detonation der Hohlladungen erst nach der Flutung erfolgt. Auf diese Weise lassen sich unerwünschte Brandschäden der Umgebung reduzieren. Insbesondere ist es selbstverständlich denkbar, eine Flutungseinrichtung der Umgebungsschutzeinrichtung mit oder ohne einem Splitterschutz gemäß Fig. 5 vorzusehen, und umgekehrt.

Ein Laufwerksgehäuse 4 ist ferner nicht unabdingbar. Es ist vielmehr ebenso denkbar, eine Hohlladung auf andere Weise direkt an einem oder mehreren Datenträgern oder in einer vorbestimmten Ausrichtung zu einem oder mehreren Datenträgern zu physikalischen Zerstörung des bzw. der selben ohne ein Laufwerksgehäuse 4 anzuordnen.

Bei dem zumindest einen Datenträger handelt es sich insbesondere um einen elektronischen bzw. digitalen Datenträger, wie Festplatten, Flash Speicher, Magnetbänder oder dergleichen. Die Erfindung ist darauf jedoch nicht beschränkt. Vielmehr ist sie auf jegliche Art von Datenträger anwendbar, beispielsweise auch analoge Datenträger, wie Papier, Mikrofilm oder dergleichen.

Eine Auslegung eine Hohlladung wird vorzugsweise gemäß der Anordnung des zumindest einen Datenträgers vorgesehen. Insbesondere kann die Auslegung einer geeigneten Hohlladung an eine Größe bzw. Ausdehnung und Anzahl der Datenträger und/oder eines Laufwerksgehäuses 4 angepasst sein.

Eine in den Ausführungsbeispielen dargestellte Anordnung der Hohlladung 3, welche auf eine lange Flachseite des Datenträgers 2 ausgerichtet ist, orientiert sich lediglich beispielhaft an der handelsüblichen Ausbildung von Festplatten in flacher Form, welche einem normierten Formfaktor entspricht, und ist selbstverständlich nicht einschränkend zu verstehen. Alternativ ist auch eine Anordnung der Hohlladung an einer kurzen bzw. schmalen Seite eines Datenträgers oder eine andersartige Datenträgergeometrie möglich.

### Bezugszeichenliste

- 1: Datenträgeranordnung
- 2: Datenträger
- 3: Hohlladung
- 3A, 3B: Hohlladung
- 3': Hohlladung
- 4: Laufwerksgehäuse
- 5: Verbindungsmittel
- 6: Umgebungsschutzeinrichtung
- 7A: erste Seite
- 7B: zweite Seite
- 8A, 8B: Wirkungszone
- 9: Umgebung

## Patentansprüche

1. Notzerstörbare Datenträgeranordnung (1), mit:
zumindest einem Datenträger (2); und
einer Hohlladung (3'), wobei die Hohlladung (3') ausgelegt ist, den zumindest einen Datenträger (2) physikalisch zu zerstören,
wobei eine Mehrzahl von Datenträgern (2) in einer magazinierten Anordnung vorgesehen und mittels der Hohlladung (3') physikalisch zerstörbar ist, und wobei die Hohlladung (3') äußere Abmessungen aufweist, welche mit der äußeren Form eines Datenträgers (2) in der magazinierten Anordnung derart konform sind, dass die Hohlladung (3') in der magazinierten Anordnung der Datenträger (2) in gleicher Weise wie die Datenträger anordenbar ist.

2. Datenträgeranordnung nach Anspruch 1, wobei ein zur Aufnahme des zumindest einen Datenträgers (2), insbesondere einer Mehrzahl von Datenträgern (2), ausgebildetes Laufwerksgehäuse (4) vorgesehen ist, welches die Ausrichtung des zumindest einen Datenträgers (2) in dem Laufwerksgehäuse (4) vorgibt.

3. Datenträgeranordnung nach Anspruch 2, wobei das Laufwerksgehäuse (4) und die Hohlladung (3') Verbindungsmittel (5) aufweisen, welche zur Anordnung der Hohlladung (3') in einer vorbestimmten Ausrichtung in oder an dem Laufwerksgehäuse (4) ausgebildet sind.

4. Datenträgeranordnung nach einem der vorangehenden Ansprüche 2 oder 3, wobei die magazinierte Anordnung durch das Laufwerksgehäuse (4) vorgegeben ist.

5. Datenträgeranordnung nach Anspruch 4, wobei eine erste Hohlladung (3'; 3A) an einer ersten Seite der magazinierten Anordnung und eine zweite Hohlladung (3'; 3B) an einer zweiten Seite der magazinierten Anordnung vorgesehen sind, wobei die erste Hohlladung (3'; 3A) und die zweite Hohlladung (3'; 3B) zum gemeinsamen physikalischen Zerstören der Mehrzahl von Datenträger (2) ausgelegt sind.

6. Datenträgeranordnung nach Anspruch 5, wobei die erste Hohlladung (3'; 3A) und die zweite Hohlladung (3'; 3B) einander entgegengesetzt ausgerichtet sind.

7. Datenträgeranordnung nach Anspruch 1, wobei eine Mehrzahl von Hohlladungen (3') innerhalb der magazinierten Anordnung verteilt angeordnet sind.

8. Datenträgeranordnung nach einem der vorangehenden Ansprüche, wobei eine Umgebungsschutzeinrichtung (6) vorgesehen ist, welche zum Schutz einer Umgebung (9) bei einer physikalischen Zerstörung des zumindest einen Datenträgers (2) mit der Hohlladung (3'; 3A, 3B) ausgebildet ist.

9. Datenträgeranordnung nach Anspruch 8, wobei die Umgebungsschutzeinrichtung (6) einen Splitterfang, insbesondere eine Splitterfangarmierung der Hohlladung (3'; 3A, 3B), aufweist.

10. Datenträgeranordnung nach Anspruch 8 oder 9, wobei die Umgebungsschutzeinrichtung (6) eine Flutungseinrichtung zur schützenden Flutung der Umgebung (9), insbesondere mit Inertgas und/oder Löschschaum, aufweist.

11. Verfahren zur Herstellung einer notzerstörbaren Datenträgeranordnung (1) nach einem der Ansprüche 1 bis 10, mit den Schritten:
Anordnen zumindest eines Datenträgers (2); und
Anordnen einer Hohlladung (3') in der magazinierten Anordnung in einer Ausrichtung relativ zu dem Datenträger (2), welche zum physikalischen Zerstören des Datenträgers (2) vorgesehen ist.

12. Verfahren zur Notzerstörung von zumindest einem Datenträger (2), mit einer Datenträgeranordnung nach einem der Ansprüche 1 bis 10 und/oder mit einer nach dem Verfahren gemäß Anspruch 11 hergestellten Datenträgeranordnung, wobei eine Hohlladung (3') derart zur Detonation gebracht wird, dass der zumindest eine Datenträger (2) physikalisch zerstört wird.

13. Hohlladung (3') für eine Datenträgeranordnung nach Anspruch 1 bis 10, mit äußeren Abmessungen, welche einem Formfaktor eines für ein normiertes Laufwerksgehäuse (4) vorgesehenen Datenträgers (2) entsprechen.

## Claims

1. Data carrier arrangement (1) with emergency destruct capability, comprising:
at least one data carrier (2); and
a hollow charge (3'), the hollow charge (3') being configured to physically destroy the at least one data carrier (2),
wherein a plurality of data carriers (2) are provided in a magazined arrangement and are physically destructible using the hollow charge (3'), and wherein the hollow charge (3') has external dimensions which conform to the external shape of a data carrier (2) in the magazined arrangement in such a way that the hollow charge (3') can be arranged in the magazined arrangement of the data carrier (2) in the same way as the data carriers.

2. Data carrier arrangement according to claim 1, wherein a disk drive housing (4) formed to accommodate the at least one data carrier (2), in particular a plurality of data carriers (2), is provided and defines the orientation of the at least one data carrier (2) in the disk drive housing (4).

3. Data carrier arrangement according to claim 2, wherein the disk drive housing (4) and the hollow charge (3') have connecting means (5) formed for arranging the hollow charge (3') in a predetermined orientation in or on the disk drive housing (4).

4. Data carrier arrangement according to either of preceding claims 2 and 3, wherein the magazined arrangement is defined by the disk drive housing (4).

5. Data carrier arrangement according to claim 4, wherein a first hollow charge (3'; 3A) and a second hollow charge (3'; 3B) are provided on a first side of the magazined arrangement and on a second side of the magazined arrangement, the first hollow charge (3'; 3A) and second hollow charge (3'; 3B) being configured for collective physical destruction of the plurality of data carriers (2).

6. Data carrier arrangement according to claim 5, wherein the first hollow charge (3'; 3A) and the second hollow charge (3'; 3B) are orientated counter to one another.

7. Data carrier arrangement according to claim 1, wherein a plurality of hollow charges (3') are arranged distributed within the magazined arrangement.

8. Data carrier arrangement according to any of the preceding claims, wherein an environment protection device (6) is provided and is formed to protect an environment (9) in the event of physical destruction of the at least one data carrier (2) using the hollow charge (3'; 3A, 3B).

9. Data carrier arrangement according to claim 8, wherein the environment protection device (6) has a fragment capture device, in particular a fragment capture shell of the hollow charge (3'; 3A, 3B).

10. Data carrier arrangement according to either claim 8 or claim 9, wherein the environment protection system (6) has a flooding device for protective flooding of the environment (9), in particular with inert gas and/or extinguishing foam.

11. Method for manufacturing a data carrier arrangement (1) with emergency destruct capability according to any of claims 1 to 10, comprising the steps of:
arranging at least one data carrier (2); and
arranging a hollow charge (3') in the magazined arrangement in an orientation, relative to the data carrier (2), which is provided for physically destroying the data carrier (2).

12. Method for the emergency destruction of at least one data carrier (2), comprising a data carrier arrangement according to any of claims 1 to 10 and/or comprising a data carrier arrangement manufactured by the method according to claim 11, wherein a hollow charge (3') is detonated in such a way that the at least one data carrier (2) is physically destroyed.

13. Hollow charge (3') for a data carrier arrangement according to any of claims 1 to 10, having external dimensions which correspond to a form factor of a data carrier (2) provided for a standardised disk drive housing (4).

## Revendications

1. Disposition de supports de données (1) destructible en cas d'urgence, comprenant :
au moins un support de données (2) ; et
une charge creuse (3'), la charge creuse (3') étant conçue pour détruire physiquement ledit au moins un support de données (2),
dans laquelle une pluralité de supports de données (2) sont prévus dans une disposition en magasin et peuvent être détruits physiquement au moyen de la charge creuse (3'), et
dans laquelle la charge creuse (3') présente des dimensions extérieures qui sont conformes à la forme extérieure d'un support de données (2) dans la disposition en magasin de telle sorte que la charge creuse (3') peut être disposée dans la disposition en magasin des supports de données (2) de la même manière que les supports de données.

2. Disposition de supports de données selon la revendication 1, dans laquelle il est prévu un boîtier de lecteur (4) conçu pour recevoir ledit au moins un support de données (2), en particulier une pluralité de supports de données (2), et qui prédéfinit l'orientation dudit au moins un support de données (2) dans le boîtier de lecteur (4).

3. Disposition de supports de données selon la revendication 2, dans laquelle le boîtier de lecteur (4) et la charge creuse (3') présentent des moyens de liaison (5) qui sont conçus pour disposer la charge creuse (3') selon une orientation prédéterminée dans ou sur le boîtier de lecteur (4).

4. Disposition de supports de données selon l'une des revendications 2 ou 3 précédentes, dans laquelle la disposition en magasin est prédéfinie par le boîtier de lecteur (4).

5. Disposition de supports de données selon la revendication 4, dans laquelle une première charge creuse (3' ; 3A) est prévue sur un premier côté de la disposition en magasin et une deuxième charge creuse (3' ; 3B) sur un deuxième côté de la disposition en magasin, la première charge creuse (3' ; 3A) et la deuxième charge creuse (3' ; 3B) étant conçues pour détruire physiquement ensemble la pluralité de supports de données (2).

6. Disposition de supports de données selon la revendication 5, dans laquelle la première charge creuse (3' ; 3A) et la deuxième charge creuse (3' ; 3B) sont orientées de manière opposée l'une par rapport à l'autre.

7. Disposition de supports de données selon la revendication 1, dans laquelle une pluralité de charges creuses (3') sont réparties à l'intérieur de la disposition en magasin.

8. Disposition de supports de données selon l'une des revendications précédentes, dans laquelle il est prévu un moyen de protection de l'environnement (6) qui est conçu pour protéger un environnement (9) en cas de destruction physique dudit au moins un support de données (2) avec la charge creuse (3' ; 3A, 3B).

9. Disposition de supports de données selon la revendication 8, dans laquelle le moyen de protection de l'environnement (6) présente un pare-éclats, en particulier une armature pare-éclats de la charge creuse (3' ; 3A, 3B).

10. Disposition de supports de données selon la revendication 8 ou 9, dans laquelle le moyen de protection de l'environnement (6) présente un moyen de noyage pour le noyage protecteur de l'environnement (9), en particulier avec un gaz inerte et/ou une mousse d'extinction.

11. Procédé de fabrication d'une disposition de supports de données (1) destructible en cas d'urgence selon l'une des revendications 1 à 10, comprenant les étapes consistant à :
disposer au moins un support de données (2) ; et
disposer une charge creuse (3') dans la disposition en magasin selon une certaine orientation par rapport au support de données (2), laquelle est prévue pour détruire physiquement le support de données (2).

12. Procédé de destruction d'urgence d'au moins un support de données (2), avec une disposition de supports de données selon l'une des revendications 1 à 10 et/ou avec une disposition de supports de données fabriquée selon le procédé de la revendication 11, dans lequel une charge creuse (3') est amenée à détoner de telle sorte que ledit au moins un support de données (2) soit physiquement détruit.

13. Charge creuse (3') pour une disposition de supports de données selon les revendications 1 à 10, ayant des dimensions extérieures qui correspondent à un facteur de forme d'un support de données (2) prévu pour un boîtier de lecteur normalisé (4).
